# EUROPEAN PATENT SPECIFICATION

(11) **EP 1 429 524 B1**
(45) Date of publication and mention of the grant of the patent: **12.04.2006**
(21) Application number: 02027385.0
(22) Date of filing: 09.12.2002
(51) Int. Cl.: H04M 1/02

(54) **Radio terminal with two-way hinge**
Funkgerät mit Zweiwegegelenkelement
Terminal radio avec charnière double

(43) Date of publication of application: 16.06.2004
(73) Proprietor: Sony Ericsson Mobile Communications AB, 221 88 Lund (SE)
(72) Inventor: Barvesten, Mats, 222 29 Lund (SE)
(74) Representative: Lindberg, Olle Nils Olof

(56) References cited:
- WO-A-01/84269
- DE-U- 29 704 171

## Description

### Field of the invention

The present invention relates generally to portable radio communication terminals useable for speech and data communication, such as mobile phones or small size computers with audio communication capabilities. In particular, the invention relates to communication terminals devised to be used both as a traditional phone and as a keyboard-controlled computer.

### Background

The first commercially attractive cellular telephones or terminals were introduced in the market at the end of the 1980's. Since then, the mobile phone industry has had an enormous development both regarding quality of service and transmission capabilities, as well as the technology for producing advanced communications terminals. A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

The end users have a number of conflicting requirements on the mobile phones. Basically, the terminal should be as small and light-weight as possible. Furthermore, is should provide more and more advanced functions, have a long battery time, and a user-friendly interface. As technology advances, new or previously implemented features can be miniaturised, rendering smaller terminals. This concerns e.g. battery technology and electronics. Still, there is only so much space in a terminal, and in order to be competitive the elements of the terminal must be carefully packaged. Built-in antennas of different types have eliminated the need for protruding antenna elements.

So called clamshell terminals have been marketed for a number of years e.g. by Motorola® and Samsung®. The clamshell design involves two terminal members, hinged together at respective short ends, such that the terminal may be unfolded to reveal its user interface. A clamshell terminal can host a larger user interface, e.g. a larger display, without increasing the total length of the terminal when folded, compared to a standard non-foldable terminal. With the increasing development of advanced data transmission and presentation capabilities, such as images and video, a large display will be a desirable feature.
To this date no clamshell terminals have been introduced into the market with touch-sensitive displays for data input. However, this feature has been implemented in other types of terminals from e.g. Ericsson® and Nokia®. Still, in many cases it is often desirable to include a physical keyboard for better and easier data input. Furthermore, if the terminal is devised to be used as a computer, the standard terminal keypad will generally be considered to be unsatisfactory. Yet, the solutions for mobile phones presented so far having, keyboards that are larger than the traditional keypads including number keys and control keys, have resulted in too large terminals or cumbersome user interfaces.

WO 0184269 discloses a self-configuring multiple element portable electronic device and method. The device comprises at least a first electronic element and a second electronic element and a joint connecting the first electronic element and the second electronic element, with the joint allowing movement in more than one plane of the first electronic element in relation to the second electronic element, wherein the self configuring multiple element portable electronic device is capable of self configuring an operational mode based on a relative position of the first electronic element with respect to the second electronic element.

German Utility Model DE 29704171 discloses a multiple element portable and foldable device. The device comprises four elements joint together, such that they may be stacked onto each other, or unfolded in various directions for exposing different surfaces of the elements, thus being adapted for different use of the device.

### Summary of the invention

A main target for terminal providers today is consequently to produce highly compact mobile phones, with a balanced relation between size and performance. Furthermore, the distinction between a radio communication terminal, such as a phone, and a pocket computer, is about to be erased since both features will be implemented in one and the same device. The mobile phone industry and the neighbouring industries, including developers of PC:s (Personal Computer) and handheld computers such as PDA:s (Personal Digital Assistants), entertainment industry etc, are trying to identify and develop consumer devices that combine desired features from these different fields in an attractive way. A general problem with such a device is to combine an ergonomic and rich user interface experience in a small device, without sacrificing its performance as a phone. It is therefore a general object of the invention to provide a communication terminal overcoming the deficiencies of the prior art, and particularly said general problem.

According to the invention, this object is fulfilled by a radio communication terminal, comprising a first terminal member carrying a user input interface, a second terminal member carrying a user output interface, a first hinge device connecting said terminal members for unfolding the terminal about a first rotation axis from a closed position to a first open position, a second hinge device for unfolding the terminal about a second rotation axis, perpendicular to said first axis, to a second open position, wherein the first terminal member comprises a first terminal member portion carrying a first user input interface portion, and a second terminal member portion carrying a second user input interface portion, the first and second terminal member portions being connected to each other by said second hinge device, such that the first terminal member portion is unfoldable to the second open position to reveal the first user input interface portion and a part of the user output interface, with a complementary part of the user output interface arranged face to face with the second user input interface portion.

Further aspects of embodiments of the invention are set out in the dependent claims.

According to a first aspect, this object is fulfilled by a radio communication terminal, comprising a first terminal member carrying a first user interface, a second terminal member carrying a second user interface, and a first hinge device connecting said terminal members and having a first rotation axis about which the terminal can be unfolded from a closed position to a first open position, wherein a second hinge device connects said terminal members such that the terminal can be unfolded about a second rotation axis, perpendicular to said first axis, to a second open position.

Preferably, said terminal members comprise substantially plane elongated bodies, wherein said first axis extends in the respective plane of said bodies, parallel to the elongate extension of said bodies, and the second axis extends perpendicular to the elongate extension of said bodies.

Advantageously, said terminal members are placed with said first and second interfaces facing each other in said closed position.

In a first embodiment, said first terminal member comprises a first and a second terminal member portion carrying a first and a second portion of said first interface, respectively, wherein said first and a second terminal member portions are connected to each other through said second hinge device.

Said first terminal member portion may be biased to assume said second open position, and carry a first latch devised to releasably lock said first terminal member portion in a position in which extends in the same plane as said second terminal member portion. In such an embodiment, a first locking member cooperating with said latch is devised on said second terminal member portion, or on said second terminal member.

The first terminal member portion may optionally be biased to assume a position in which the first and second terminal member portions are arranged beside each other in the same plane, and carry a first latch devised to releasably lock said first terminal member portion in said second open position. In such an embodiment, a first locking member cooperating with said latch is devised on said second terminal member portion.

Preferably, said first interface comprises a data input interface.

In a specific embodiment, said first portion of said first interface includes a numeric keyboard for phone mode operation of the terminal, adapted for use in an orientation with the elongate extension of the terminal vertically. Optionally, said first portion of said first interface includes a touch-sensitive display devised to present a functional numerical keyboard for phone mode operation of the terminal, adapted for use in an orientation with the elongate extension of the terminal vertically.

In said first embodiment, said second terminal member portion of the first terminal member is preferably connected to said second terminal member through said first hinge device.

Preferably, said first terminal member carries a second latch devised to releasably engage with a second cooperating locking member devised on said second terminal member, and advantageously said second latch is devised on said second terminal member portion of said first terminal member.

In said first embodiment, said first interface preferably comprises an alphanumerical keyboard for computer mode operation of the terminal, adapted for use in an orientation with the elongate extension of the terminal arranged horizontally. Optionally, said data input interface includes a touch-sensitive display devised to present a functional alphanumerical keyboard for computer mode operation of the terminal adapted for use in an orientation with the elongate extension of the terminal arranged horizontally.

Preferably, said alphanumerical keyboard for computer mode operation comprises said numerical keyboard for phone mode operation.

Said first terminal member portion and said second terminal member portion may be substantially equally long. Optionally, said first terminal member portion is longer than said second terminal member portion.

In a second embodiment, said second hinge device is connected adjacent to an edge of said second terminal member, and extends perpendicular to the elongate extension of said second terminal member.

Preferably, said second hinge device connects a corner portion of said second terminal member to said first terminal member.

Advantageously, said second hinge device connects said corner portion of said second terminal member to said first terminal member through said first hinge device, such that the second rotation axis is rotatable about said first rotation axis. In such an embodiment, said second terminal member preferably comprises a first latch, spaced from said corner portion in the direction of said second rotation axis, devised for releasable attachment to a first cooperating locking member on said first terminal member.

The second terminal member portion may be biased to assume said second open position, and carry a second latch devised to releasably lock the terminal in its closed position. In such an embodiment a second locking member cooperating with said second latch is preferably devised on said first terminal member.

In a variant of said second embodiment, said first terminal member comprises a second terminal member body and a frame device connected to said second terminal member body through said second hinge device, whereas said frame device is connected to said first terminal member through said first hinge device.

Preferably, said second terminal member body comprises a first latch, spaced from said second hinge device in the elongate direction, devised for releasable attachment to a first cooperating locking member on said frame device.

Furthermore, said second terminal member preferably comprises a second latch, spaced from said first hinge device perpendicular to the elongate direction, devised for releasable attachment to a second cooperating locking member on said first terminal member.

In this embodiment, said first terminal member portion and said second terminal member portion are preferably substantially equally long. In an alternative embodiment, said second terminal member portion is shorter than said first terminal member portion.

According to a second aspect, the stated object is fulfilled by a radio communication terminal, usable for speech communication and for data input and processing, said terminal having first and second substantially plane elongated terminal members connected to each other by a two-way hinge arrangement, such that said terminal may be folded to a closed mode with said terminal members arranged in contact face to face, and wherein the terminal may be unfolded in the elongate extension in a clamshell manner to assume a phone mode orientation, and unfolded transverse to the elongate extension in a laptop-like manner to assume a computer mode orientation.

The detailed description shows specific features of various embodiments related to the aspects above.

### Brief description of the drawings

The features and advantages of the present invention will be more apparent from the following description of the preferred embodiments with reference to the accompanying drawings, on which
Fig. 1 schematically illustrates a first embodiment of the present invention in a closed position;
Fig. 2 schematically illustrates the first embodiment unfolded to a computer mode position or orientation;
Fig. 3 - 5 shows different views of the embodiment of Fig. 1 when folded;
Fig. 6 schematically illustrates the unfolding of the embodiment of Fig. 1 to phone mode;
Fig. 7 shows a perspective view of the embodiment of Fig. 1 when unfolded to phone mode;
antenna arrangement according to the invention, in a combined antenna and battery embodiment;
Figs 8 - 10 schematically illustrate a side view of a variant of the embodiment of Fig. 1, when folded, during unfolding and when unfolded to phone mode;
Figs 11 - 13 schematically illustrate a side view of another variant of the embodiment of Fig. 1, when folded, during unfolding and when unfolded to phone mode;
Fig. 14 illustrates a second embodiment of the present invention in a closed position;
Fig. 15 shows a perspective view of the embodiment of Fig. 14 when unfolded to phone mode;
Fig. 16 schematically illustrates the second embodiment unfolded to a computer mode position or orientation;
Figs 17 - 19 schematically illustrate a variant of the second embodiment in the orientations corresponding to Figs 14 - 16, respectively;
Figs 20 - 22 illustrate a third embodiment of the present invention, in the orientations corresponding to Figs 14 - 16, respectively;
Fig. 23 illustrates an embodiment of the invention corresponding to the first embodiment as shown in Figs 1 - 7, when unfolded to computer mode as in Fig. 2;
Fig. 24 illustrate the embodiment of Fig. 23 in phone mode;
Fig. 25 illustrates a part of the data input interface which is accessible in the phone mode orientation of the terminal embodiment of Fig. 24, also constituting a part of the data input interface of terminal when arranged in the computer mode orientation as shown in Fig. 23;
Fig. 26 illustrates an embodiment of the invention corresponding to the first embodiment as shown in Figs 14 - 16, when unfolded to computer mode as in Fig. 16; and
Fig. 27 illustrates the embodiment of Fig. 26 in phone mode.

### Detailed description of preferred embodiments

The present description relates to the field of radio communication terminals. The term radio terminal or communication terminal, also denoted terminal in short in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawings.

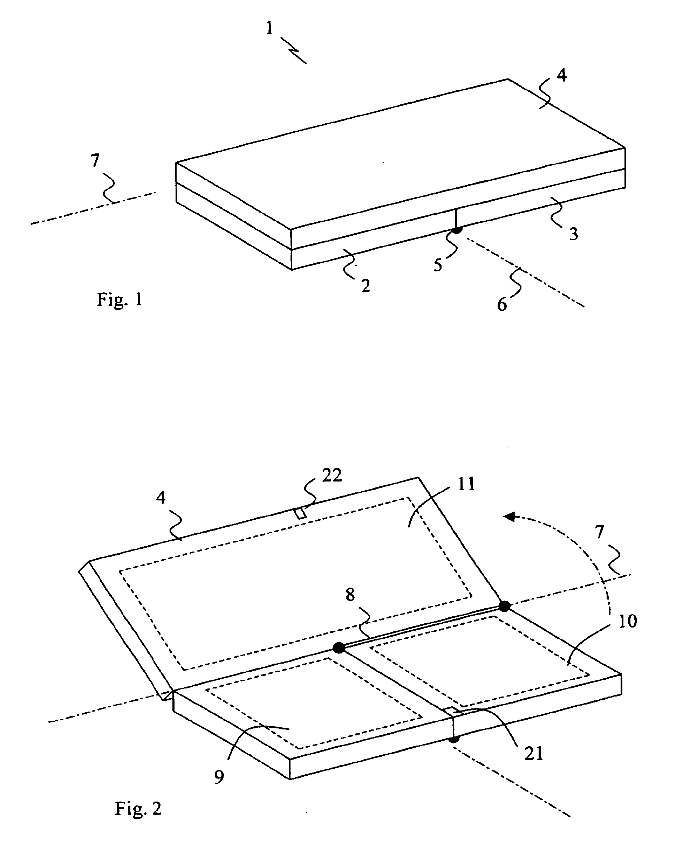

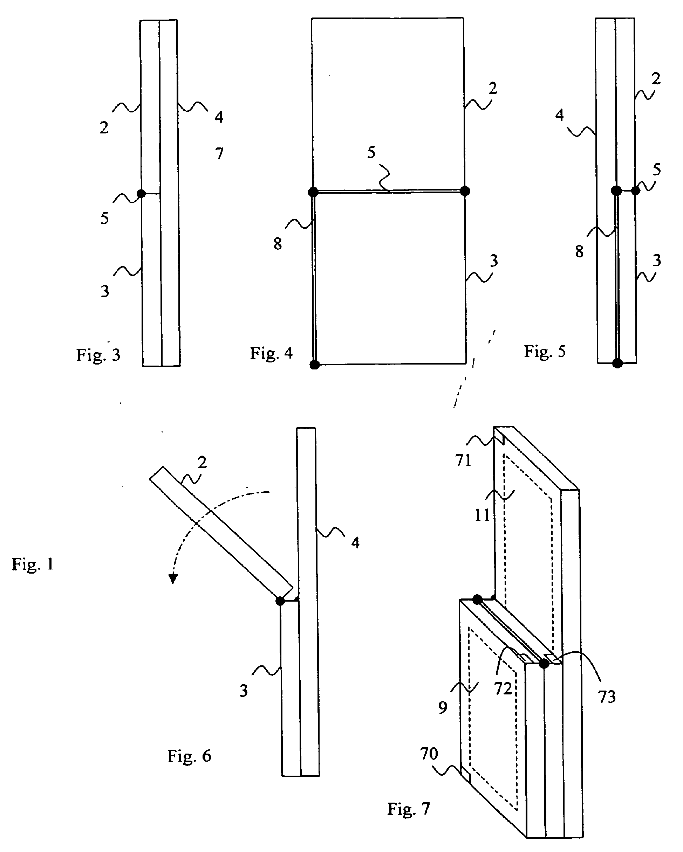

The first embodiment of the present invention is disclosed in Figs 1-7. Fig 1 shows the radio communication terminal 1 in a perspective view in its closed position. The terminal 1 comprises two terminal members, a first terminal member comprising the member portions 2 and 3, and a second terminal member 4. Both the first and the second terminal members are substantially elongated and plane. In its closed position, the first and second terminal members are arranged on top of each other as shown in Fig 1. In one embodiment, the first 2,3 and second 4 terminal members do not have any user interface on the parts facing outwardly when arranged in its closed position. By user interface is here meant a display, a keyboard, a speaker, a microphone, or the like. In another variant of this embodiment, a display or other user interface may be devised also on the portions facing outwardly in the closed position of terminal 1.

In accordance with the present invention, terminal 1 may be used both in a traditional phone mode, operated by a user by means of audio communication. Furthermore, the same terminal may also be used in a traditional computer or laptop mode. Fig 2 illustrates the embodiment of Fig 1 when open to a first position representing the computer mode. The second terminal member 4 is connected to the first terminal member 2, 3 by a first hinge device 8, by means of which terminal 1 may be unfolded about a rotation axis 7. As evidenced by Fig 2, a characterising feature for the computer mode is that the terminal is unfolded about an axis 7, parallel to the elongated extension of the terminal members 2, 3 and 4. In this orientation, terminal 1 is preferably operated by means of a user input interface 9, 10 on the first terminal member, whereas a user output interface 11 is arranged on the second terminal member 4, positioned above the first terminal member 2, 3 as seen from the user.

In the specific embodiment disclosed in Figs 1-7 the second terminal member 4 is connected only to the second portion 3 of the first terminal member, by said first hinge device 8. However, in another embodiment, second terminal member 4 may be connected also to a first portion 2 of the first terminal member. In such a case, that connection is arranged by means of releasable locking means, as will be further explained below. Preferably, a latch 21 is arranged on the first terminal member, devised to cooperate with a locking member 22 on the second terminal member, for the purpose of locking terminal 1 in the closed position as illustrated in Fig 1.

Figs 3-5 illustrate the embodiment of Fig 1 as seen from different sides. As is evidenced by these drawings, the terminal 1 further includes a second hinge device 5, which extends perpendicular to the elongate extension of the terminal, and also to the first hinge device 8. The second hinge device 5 connects the two member portions 2, 3 of the first terminal member. As seen in Fig 6, the first member portion 2 of a first terminal member may thereby be rotated about the rotation axis of the second hinge device 5 from the closed position of terminal 1.

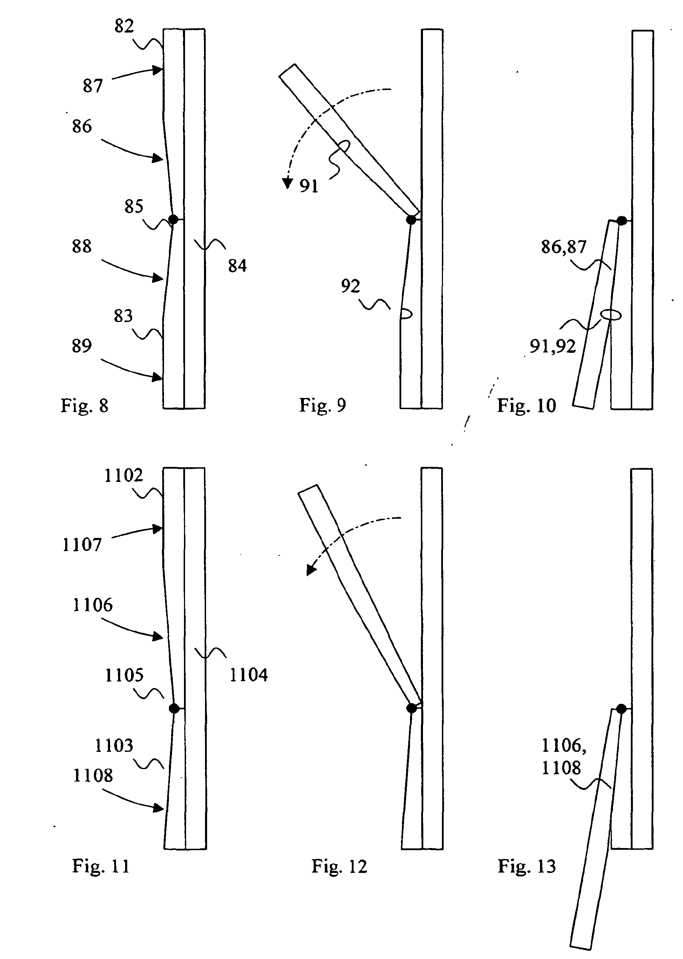

Fig 7 illustrates a perspective view of terminal 1 when arranged in the second open position adapted for phone mode operation. In this second open position, a first portion 9 of the first user interface, preferably a first user input interface such as a keyboard, a touch sensitive display or a microphone, is revealed and faces outwardly from terminal 1. Also, the removal of the first terminal member portion 2 from its closed position reveals a portion of the second user interface arranged on the second terminal member 4. The second user interface 11 is preferably a user output interface, such as a display and/or a speaker. The first terminal member portion 2 may be biased to assume the second open position as disclosed in Fig 7, and in such an embodiment the terminal may include cooperating locking members for holding the first member portion 2 in the plane extension of the second portion 3, as it is arranged in the closed position of Fig 1 and in the computer mode position of Fig 2. Cooperating locking members may be arranged on the two member portions of the first terminal member, as a latch 72 and a cooperating locking member 73 devised to engage with each other to maintain the two terminal member portions 2, 3 in the same plane extension. In another specific embodiment the first terminal member portion 2 may instead carry a latch 70 devised to engage with a locking member 71 arranged on the second terminal member 4. In such an embodiment, the engagement of the cooperating locking devices 70, 71 should preferably be such that the first terminal member 2, 3 may be rotated about rotation axis 7 from the second terminal member portion 4 when those locking means 70, 71 are engaged. In another embodiment the first terminal member portion 2 may be biased to assume the position in relation to the second terminal member portion 3 as evidenced by Figs 1 and 2, i.e. in the plane extension of the second terminal member portion 3. In such a case, an arrangement for locking and maintaining the first terminal member portion 2 in the second open position as disclosed in Fig 7, is preferably applied. Such an arrangement is schematically illustrated in Figs 9 and 10, but may also be implemented in the embodiments disclosed in Figs 1-7 and Figs 11-13.

Figs 8-10 illustrate a variant of the previously described embodiment, and illustrated in the corresponding views of Figs 3-5. The difference from the previous embodiment is that the first terminal member portion 82 and the second terminal member portion 83 each include an angled portion 86 and 88, respectively. This way, by rotating and opening the first terminal member portion 82 away from the second terminal member 84, down to engagement with the second terminal member portion 83, the interface side of the first terminal member portion 82 will be arranged at an angle from the second terminal member 84 in the second open position as illustrated in Fig 10. The purpose of this is to provide a more natural relation to the users ear and mouth. This also means that it would be easier for the user to place the speaker, arranged at the top of the second terminal member 84, and the microphone, arranged at the bottom of the first terminal member portion 82 in the position of Fig 10, closer to the ear and mouth of the user, thus rendering a more efficient audio interface. The specific realisation of the cooperating members 91, 92, devised to engage and maintain the terminal 1 in its second open position, as disclosed in Fig 10, is not relevant to the invention. Furthermore, a terminal embodied according to Figs 8-10 may of course be arranged such that first terminal member portion 82 is biased in the upper position in Fig 8, as has been described in conjunction with Figs 1-7 above.

Figs 11-13 illustrate yet another specific embodiment, resembling the embodiment of Figs 8-10. However, in this embodiment the first terminal member portion 1102 is longer than the first second terminal member portion 1103. This way, the terminal will be longer in its second open position as displayed in Fig 13. Furthermore, the first portion 9 of the first user interface arranged on the first terminal member portion 1102 will be larger than for the embodiments of Figs 1-10. Also, a larger portion of the second user interface 11 arranged on the second terminal member 1104 will be accessible for the user in the second open position as displayed in Fig 13.

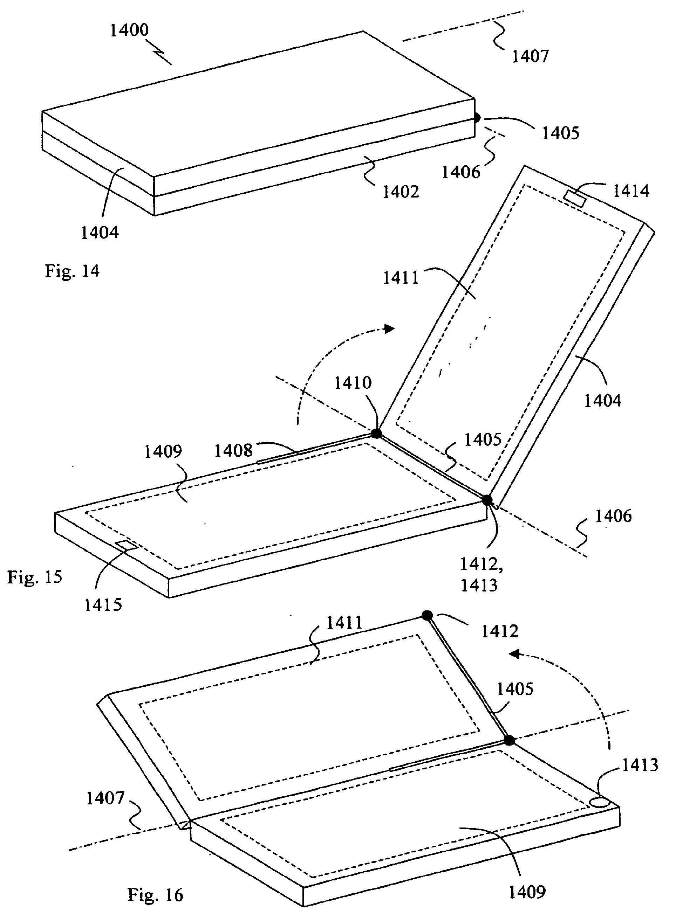

Figs 14-16 illustrate a second general embodiment of the present invention. As for the embodiment of Fig 1, the embodiment of Fig 14 is disclosed in its closed position, wherein the user interfaces of terminal 1400 are arranged face to face. In this embodiment, only a single first terminal member 1402 is connected to a single second terminal member 1404 by means of a two-way hinge device. This two-way hinge device provides means for unfolding terminal 1400 to a first open position for computer mode operation, around a first rotation axis 1407, and into a second open position about a second rotation axis 1406 for phone mode operation. As is more clearly evidenced by Figs 15-16, the two-way hinge device comprises a first hinge device 1408 connecting the first terminal member 1402 to the second terminal member 1404 at a corner portion 1410. The first hinge device 1408 defines the first rotation axis 1407, about which the second terminal member 1404 may be rotated into computer mode as illustrated in Fig 16. Closing of terminal 1400 is obtained by a cooperating action between a latch 1412, spaced from the corner portion 1410 in the direction of the second rotation axis. This latch 1412 is devised for releasable attachment to a first cooperating locking member 1413, arranged on the first terminal member. Furthermore, as evidenced by Fig 16, the engagement between latch 1412 and locking member 1413 also provides an engagement between the second hinge device 1405, which is integrated with the second terminal member 1404, with the first terminal member 1402. In the drawing of Fig 15, the terminal 1400 is shown in its second open position adapted for phone mode operation. Herein, the second terminal member 1404 has been rotated about the second rotation axis 1406, by means of the second hinge device 1405. Also the second hinge device 1405 connects the first terminal member1402 to the second terminal member 1404 at the corner portion 1410. However, as mentioned, the engagement of latch 1412 and locking member 1413 preferably provides a second connection point devised to maintain engagement even when rotating the second member portion 1404 about the rotation axis 1406. Such an arrangement may provide a more stable operation of the terminal 1400 in phone mode operation. Optionally, a latch 1414 may be devised on the second terminal member 1404, devised for engagement with a locking cooperating locking member 1415 on the first terminal member 1402. However, it should be noted that this second general embodiment of Figs 14-16 may also implement the functions described in conjunction with the previous drawings, namely a biasing of the terminal members in either the closed position or in one of the two open positions.

The embodiment of Figs 14-16 provides access to a larger user interface in phone mode operation than the embodiment of Figs 1-13. The two-way hinge device may for instance comprise a Polhem knot arranged at the corner position 1410.

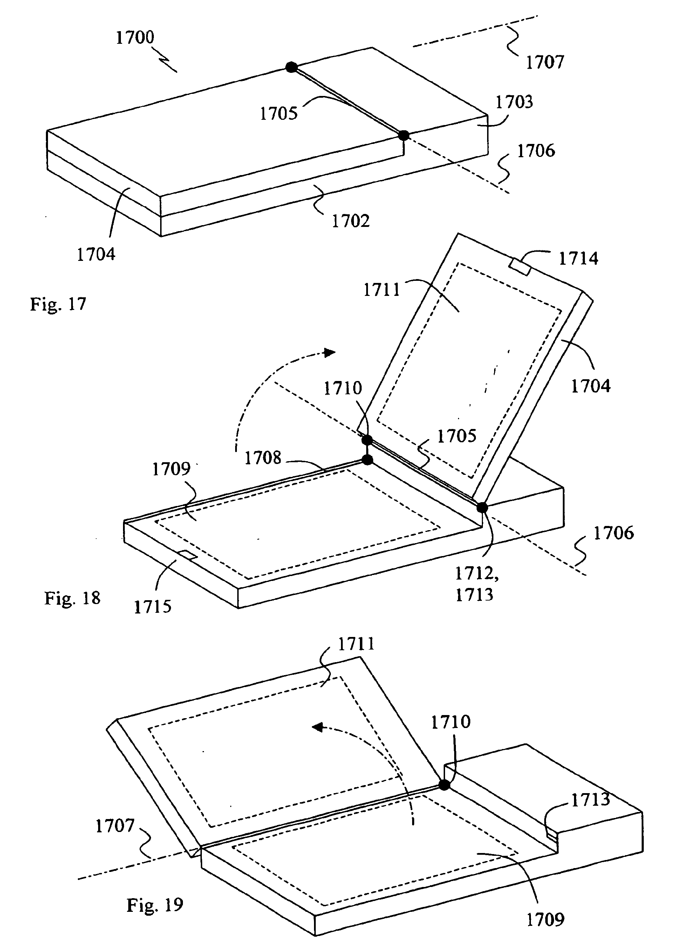

Figs 17-19 illustrate a third general embodiment in which the second terminal member 1704 is connected at an edge to the second hinge device 1705 much like in the embodiment of Figs 14-16. In this case, the first terminal member 1702 is longer than the second terminal member 1704, and comprises an edge portion 1703 to which the second terminal member 1704 is connected by the second hinge device 1705. The second hinge device 1705 connects the first and second terminal members at the corner portion 1710, about which the second terminal member 1704 may be rotated about the rotation axis 1706. However, as described in conjunction with Figs 14-16, a latch 1712 of the second hinge device 1705 is preferably devised to engage with a cooperating locking member 1713 on the first terminal member, in such a way that engagement is maintained between the terminal members by the cooperating action of latch 1712 and locking member 1713, during rotation about the second rotation axis 1706. A latch 1714 may be devised on the second terminal member 1704, devised for releasable engagement with a cooperating locking member 1715 on the first terminal member 1702 in the close position as disclosed in Fig 17.

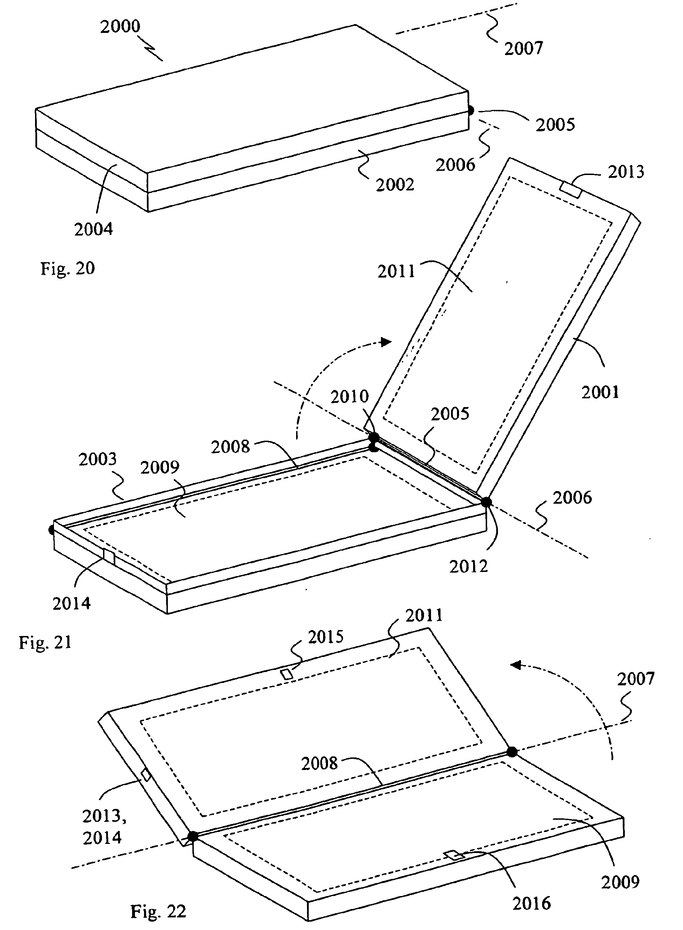

Figs 20-22 disclose a fourth general embodiment. This embodiment is similar of the embodiment of Figs 14-16, in that the second terminal member 2004 is connected at an edge of the first terminal member 2002. However, in this case the second terminal member 2004 comprises a second terminal member body 2001, basically corresponding to the second terminal member 1404 of Fig 15, and a frame device 2003 connected to the second terminal member body 2004 through the second hinge device 2005. A latch 2013 is devised on the second terminal member body 2001 for a releasable connection with a cooperating locking member 2014 on the frame device 2003, preferably at a position spaced from the rotation axis 2006 of the second hinge device 2005. Furthermore, the frame device 2003 is devised with a second latch 2015 which is connectable to a second locking member 2016 on the first terminal member 2002, as is shown in Fig 22. The benefit of this particular embodiment is that a more even load of forces is provided than in the embodiment of Figs 14-16. In the closed position of terminal 2000, the second terminal member body 2001 and the frame device 2003 are interconnected by the cooperating latch 2013 and locking member 2014. Furthermore, the second terminal member 2004 is engaged with the first terminal member 2002 by the locking action of latch 2015 and locking member 2016. When opening for unfolding terminal 2002 into the second open position of Fig 21 for phone mode operation, the frame device 2003 is maintained in connection with the first terminal member 2002 by the locking action of latch 2015 and locking member 2016, whereas the second terminal member body 2001 is rotated about the second rotation action 2006 by means of the second hinge device 2005. Said second hinge device 2005 connects the second terminal member body 2001 to the frame device 2003 at, at least, two points along the second rotation axis 2006, for instance at opposite corner portions 2012 and 2010. This arrangement means that the second terminal member body 2001 is insensitive to twisting forces. When opening terminal 2000 from its closed position into the first open position, or computer mode position, as disclosed in Fig 22, the engagement between latch 2013 of the second terminal member body and locking member 2014 of the frame device 2003 is maintained, such that the entire second terminal member 2004 is rotated about the first rotation axis 2007 by means of the first hinge device 2008. As for the second hinge device 2005, the first hinge device 2008 preferably has at least two points of articulation engaging the first and second terminal members, spaced apart along the first rotation axis 2007, providing a twist-insensitive design.

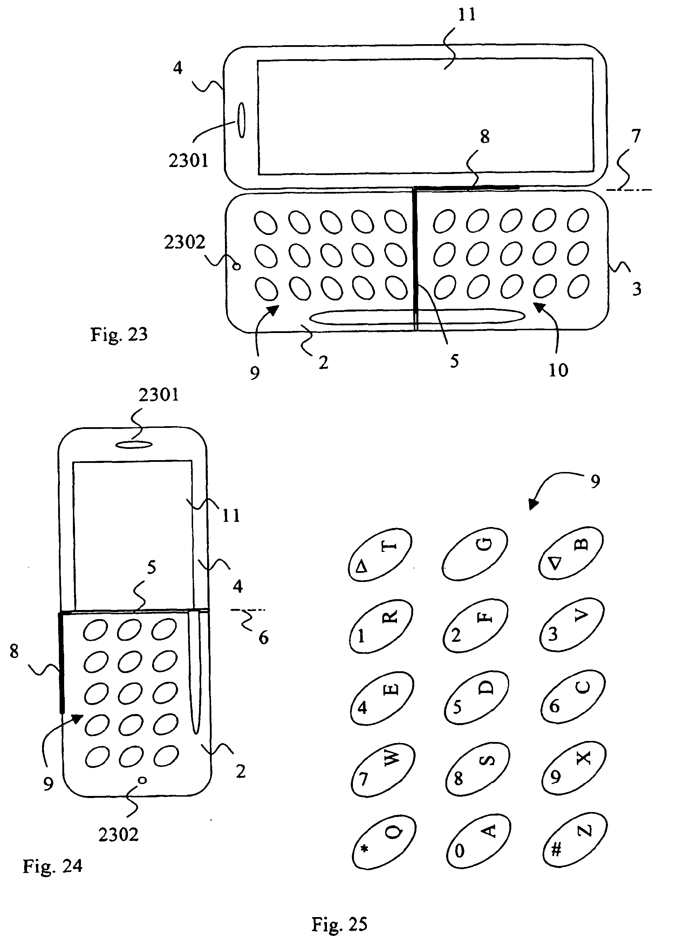

Figs 23 and 24 disclose the present invention in shape of an embodiment corresponding to that of Figs 1-7. In Fig 23, the terminal is shown in its first open position for computer mode operation. The first terminal member, including terminal member portions 2 and 3, carries a first 9 and a second 10 user input interface portion, respectively. Furthermore, the first user interface includes a microphone 2302. In computer mode operation, the first terminal member portions 2, 3 are arranged in the same plane beside each other, forming one large user input interface for computer mode operation. Preferably, this user input interface includes an alfa-numeric keyboard or a touch sensitive display devised to present an alfa-numerical keyboard, such as a traditional typewriter keyboard interface. The larger key shown at the bottom of the user-input interface 9, 10 indicates the presence of a spacebar. The second terminal member 4 is rotated about the first rotation axis 7, by means of the first hinge device 8, which connects the second portion 3 of the terminal member and the second terminal member 4. The second terminal member comprises a user output interface 11, preferably a display, and an audio output such as a speaker 2301.

Fig 24 illustrates the same terminal as in Fig 23, but oriented in the second open position for phone mode operation. As previously disclosed in combination with Fig 7, the first terminal member portion 2 has in this mode been rotated about the second rotation axis 6, by means of the second hinge device 5. This way, the first portion 9 of the user input interface faces outwards, as well as a portion of the user output interface 11 on the second terminal member 4.

Fig 25 illustrates the first portion of the user input interface 9, as oriented when used in the phone mode as disclosed in Fig 24. The separate keys of keyboard 9 carry markings for indicating the action triggered when pressing the respective key. At the left side of each key a marking is made oriented to be red in phone mode operation. These keys therefore preferably include the keys of a standard numerical keyboard of a mobile phone. Other keys may of course also be implemented. When used in the computer mode as shown in Fig 23, the first portion 9 of the user input interface would be rotated 90° to the right. When read in that orientation the lower markings indicate the letters of a standard alfa-numerical keyboard of the traditional typewriter arrangement. Obviously, the second portion 10 of the user input interface includes keys for the remaining letters of the alfa-numerical keyboard. Separate keys for the numbers 0-9 may be implemented, but preferably a Num Lock function key is included such that the keys illustrated in Fig 25 may be used also in computer mode for number data input.

The benefit of the embodiment of Figs 23 and 24 is that although a full keyboard is made available in computer mode, only the absolutely necessary number keys and control keys are accessible in phone mode. This way, the terminal will still be fairly small when unfolded to the second open position as disclosed in Fig 24. Preferably, the terminal includes a micro-controller with associated software. Upon unfolding the terminal into the first or the second position, this micro-controller is preferably devised to change the orientation of presented symbols, images or characters on the user output interface 11, such that it will be displayed to be read with the user input interface 9, 10 arranged below of the user output interface 11. In other words, objects or characters will be displayed on the user output interface 11 in the orientation the terminal is disclosed in Fig 23 and Fig 24, respectively. A display control contact is preferably connected to the first 8 and second 5 hinge device, devised to sense the unfolding of the terminal into one of the first or second open position. Said display control contact is preferably communicatively connected to the microprocessor system of the terminal. Furthermore, in order to provide communication between the two terminal members 2 and 4, and the corresponding members of the previously described embodiments, some form of data and power connection must be provided between the two terminal members. Such a connection may for instance be provided by a flex film between the two members.

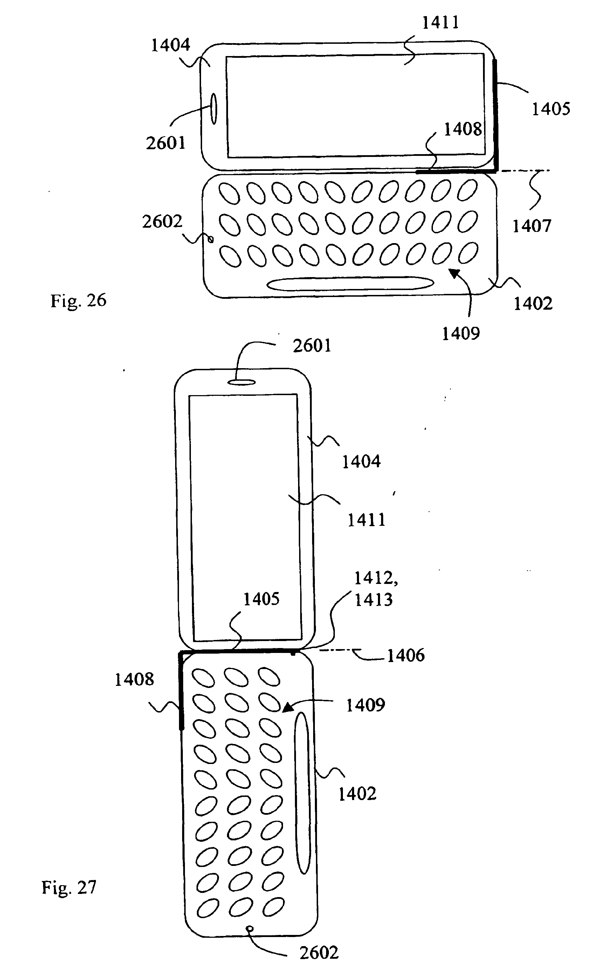

Figs 26 and 27 disclose, in a manner similar to Figs 23 and 24, a more detailed illustration of the embodiments of Figs 14-16. These embodiments differ from the embodiments in Figs 23 and 24 by the arrangement of the hinge devices at an outer corner of the respective terminal members. The first hinge device 1408 connects the first terminal member 1402 to the second terminal member 1404 such that unfolding is achieved about the first rotation axis 1407. In this computer mode, the second hinge device 1405 follows with the second terminal member 1404. When the terminal is closed, and subsequently opened in its second open position for phone mode operation, as illustrated in Fig 27, the second hinge device 1405 preferably includes means 1412,1413 for engaging the first terminal member 1402 to the second terminal member 1404 at a position spaced from the connection between the two hinge devices 1404, 1408, along the second rotation axis 1406. The user-input interface 1409 preferably includes an alfa-numerical interface and a microphone 2602, whereas the user output interface 1411 preferably includes a display and a speaker 2601.

This embodiment has the benefit of a simpler construction than that of Figs 23 and 24. The hinge devises 1405 and 1408 may be provided by an integrated hinge device including a Polhem knot. Preferably, the alfa-numerical keyboard interface 1409 includes the keys as disclosed in Fig 25. Furthermore, also this embodiment preferably includes the previously described function of orienting the displayed characters or symbols on the user output interface 1411 in dependence of which open position has been assumed.

The principles of the present invention have been described in the foregoing by examples of embodiments or modes of operations. However, the invention should not be construed as being limited to the particular embodiments discussed above. A skilled person will realise that the disclosed features of certain embodiments may just as well be implemented on others of the disclosed embodiments, rendering the same advantageous effects. One such feature is the implementation of means for sensing which open position the terminal has assumed, and the means for controlling the presentation of characters on the user output interface to an orientation in which those characters are correctly read when the output interface is positioned above the input interface, as seen from the user. The above described more or less specific embodiments should therefore be regarded as illustrative rather than restrictive, and it should be appreciated that variations may be made in those embodiments by persons skilled in the art, without departing from the scope of the present invention as defined by the appended claims.

## Claims

1. Radio communication terminal (1), comprising a first terminal member (2,3) carrying a user input interface (9,10), a second terminal member (4) carrying a user output interface (11), a first hinge device (8) connecting said terminal members for unfolding the terminal about a first rotation axis (7) from a closed position to a first open position, a second hinge device (5) for unfolding the terminal about a second rotation axis (6), perpendicular to said first axis, to a second open position, **characterised in that** the first terminal member comprises a first terminal member portion (2) carrying a first user input interface portion (9), and a second terminal member portion (3) carrying a second user input interface portion (10), the first and second terminal member portions being connected to each other by said second hinge device, such that the first terminal member portion (2) is unfoldable to the second open position to reveal the first user input interface portion (9) and a part of the user output interface (11), with a complementary part of the user output interface (11) arranged face to face with the second user input interface portion (10).

2. The radio communication terminal as recited in claim 1, **characterised in that** said terminal members comprise substantially plane elongated bodies, wherein said first axis extends in the respective plane of said bodies, parallel to the elongated extension of said bodies.

3. The radio communication terminal as recited in any of the previous claims, **characterised in that** said terminal members are placed with said first and second interfaces facing each other in said closed position.

4. The radio communication terminal as recited in any of the previous claims, **characterised in that** said first terminal member portion is biased to assume said second open position, and carries a first latch (70,72) devised to releasably lock said first terminal member portion in a position in which extends in the same plane as said second terminal member portion.

5. The radio communication terminal as recited in claim 4, **characterised in that** a first locking member (73) cooperating with said first latch (72) is devised on said second terminal member portion.

6. The radio communication terminal as recited in claim 4, **characterised in that** a first locking member (71) cooperating with said first latch (70) is devised on said second terminal member.

7. The radio communication terminal as recited in any of the previous claims, **characterised in that** said first terminal member portion is biased to assume a position in which the first and second terminal member portions are arranged beside each other in the same plane, and carries a first latch (91) devised to releasably lock said first terminal member portion in said second open position.

8. The radio communication terminal as recited in claim 7, **characterised in that** a first locking member (92) cooperating with said first latch is devised on said second terminal member portion.

9. The radio communication terminal as recited in any of the previous claims, **characterised in that** said first user input interface portion includes a numeric keyboard (9) for phone mode operation of the terminal, adapted for use in an orientation with an elongate extension of the terminal arranged vertically.

10. The radio communication terminal as recited in any of the previous claims 1-8, **characterised in that** said first user input interface portion includes a touch-sensitive display devised to present a functional numerical keyboard (9) for phone mode operation of the terminal, adapted for use in an orientation with an elongate extension of the terminal arranged vertically.

11. The radio communication terminal as recited in any of the previous claims, **characterised in that** said second terminal member portion (3) of the first terminal member is connected to said second terminal member (4) through said first hinge device.

12. The radio communication terminal as recited in claim 11, **characterised in that** said first terminal member carries a second latch (21) devised to releasably engage with a second cooperating locking member (22) devised on said second terminal member.

13. The radio communication terminal as recited in claim 12, **characterised in that** said second latch is devised on said second terminal member portion of said first terminal member.

14. The radio communication terminal as recited in any of the previous claims, **characterised in that** said first user input interface portion (9) and said second user input interface portion (10) together comprise an alphanumerical keyboard (9,10) for computer mode operation of the terminal, adapted for use in an orientation with an elongate extension of the terminal arranged horizontally.

15. The radio communication terminal as recited in any of the previous claims 1-13, **characterised in that** said first user input interface portion (9) and said second user input interface portion (10) include touch-sensitive displays devised to, together, present a functional alphanumerical keyboard (9,10) for computer mode operation of the terminal adapted for use in an orientation with an elongate extension of the terminal arranged horizontally.

16. The radio communication terminal as recited in claim 14 or 15, **characterised in that** said alphanumerical keyboard (9,10) for computer mode operation comprises said numerical keyboard (9) for phone mode operation.

17. The radio communication terminal as recited in any of the previous claims, **characterised in that** said first terminal member portion (2,82) and said second terminal member portion (3,83) are substantially equally long.

18. The radio communication terminal as recited in any of the previous claims 1 - 17, **characterised in that** said first terminal member portion (1102) is longer than said second terminal member portion (1103).

## Patentansprüche

1. Funkkommunikationsendgerät (1), welches ein erstes Endgeräteteil (2, 3) aufweist, welche eine Benutzereingabeschnittstelle (9, 10) aufweist, ein zweites Endgeräteteil (4), welches eine Benutzerausgabeschnittstelle (11) aufweist, eine erste Gelenkeinrichtung (8), welche die Endgeräteteile zum Öffnen des Endgeräts um eine erste Drehachse (7) von einer Schließposition zu einer ersten offenen Position verbindet, eine zweite Gelenkeinrichtung (5) zum Öffnen des Endgeräts um eine zweite Drehachse (6) senkrecht zur ersten Achse in eine zweite geöffnete Position, **dadurch gekennzeichnet, dass** das erste Endgeräteteil einen ersten Endgeräteteilbereich (2) aufweist, der einen ersten Benutzereingabe-Schnittstellenbereich (9) trägt, und einen zweiten Endgeräteteilbereich (3), der einen zweiten Benutzereingabe-Schnittstellenbereich (10) trägt, wobei der erste und der zweite Endgeräteteilbereich miteinander durch die zweite Gelenkeinrichtung verbunden sind, so dass der erste Endgeräteteilbereich (2) in die zweite offene Position geöffnet werden kann, um den ersten Benutzereingangs-Schnittstellenbereich (9) und ein Teil der Benutzerausgabeschnittstelle zu enthüllen, wobei ein komplementäres Teil der Benutzerausgabeschnittstelle (11) gegenüber dem zweiten Benutzereingabe-Schnittstellenbereich (10) angeordnet ist.

2. Funkkommunikationsendgerät nach Anspruch 1, **dadurch gekennzeichnet, dass** die Endgeräteteile im Wesentlichen ebene langgestreckte Körper aufweisen, wobei die erste Achse sich in der jeweiligen Ebene der Körper parallel zur Längsausdehnung der Körper erstreckt.

3. Funkkommunikationsgerät nach einem der vorhergehenden Ansprüche, **dadurch gekennzeichnet, dass** die Endgeräteteile so angeordnet sind, dass die erste und die zweite Schnittstelle in der geschlossenen Position einander gegenüberliegen.

4. Funkkommunikationsgerät nach einem der vorhergehenden Ansprüche, **dadurch gekennzeichnet, dass** das erste Endgeräteteilbereich vorgespannt ist, um die zweite geöffnete Position anzunehmen, und eine erste Klinke (70, 72) trägt, die dazu bestimmt ist, den ersten Endgeräteteilbereich in einer Position zu verriegeln, bei der dieser sich in der gleichen Ebene wie das zweite Endgeräteteilbereich erstreckt.

5. Funkkommunikationsendgerät nach Anspruch 4, **dadurch gekennzeichnet, dass** ein erstes Verriegelungsteil (73), welches mit der ersten Klinke (72) funktionsmäßig zusammenwirkt, auf dem zweiten Endgeräteteilbereich konstruiert ist.

6. Funkkommunikationsendgerät nach Anspruch 4, **dadurch gekennzeichnet, dass** ein erstes Verriegelungsteil (71), welches mit der ersten Klinke (70) funktionsmäßig zusammenwirkt, auf dem zweiten Endgeräteteil konstruiert ist.

7. Funkkommunikationsgerät nach einem der vorhergehenden Ansprüche, **dadurch gekennzeichnet, dass** der erste Endgeräteteilbereich vorgespannt ist, um eine Position anzunehmen, in der der erste und der zweite Endgeräteteilbereich nebeneinander in der gleichen Ebene angeordnet sind, und eine erste Klinke (91) trägt, die konstruiert ist, den ersten Endgeräteteilbereich in der zweiten offenen Position lösbar zu verriegeln.

8. Funkkommunikationsendgerät nach Anspruch 7, **dadurch gekennzeichnet, dass** ein erstes Verriegelungsteil (92), welches mit der ersten Klinke funktionsmäßig zusammenwirkt, auf dem zweiten Endgeräteteilbereich konstruiert ist.

9. Funkkommunikationsgerät nach einem der vorhergehenden Ansprüche, **dadurch gekennzeichnet, dass** der erste Benutzereingabe-Schnittstellenbereich eine numerische Tastatur (9) für einen Telefonmodusbetrieb des Endgeräts aufweist, der zur Verwendung in einer Orientierung angepasst ist, wobei eine langgestreckte Erweiterung des Endgeräts vertikal angeordnet ist.

10. Funkkommunikationsgerät nach einem der vorhergehenden Ansprüche 1 bis 8, **dadurch gekennzeichnet, dass** der erste Benutzereingabe-Schnittstellenbereich eine berührungsempfindliche Anzeige aufweist, die konstruiert ist, eine funktionelle numerische Tastatur (9) für den Telefonmodusbetrieb des Endgeräts zu zeigen, die zur Verwendung in einer Orientierung angepasst ist, wobei eine langgestreckte Erweiterung des Endgeräts vertikal angeordnet ist.

11. Funkkommunikationsgerät nach einem der vorhergehenden Ansprüche, **dadurch gekennzeichnet, dass** der zweite Endgeräteteilbereich (3) des ersten Endgeräteteils mit dem zweiten Endgeräteteil (4) über die erste Gelenkeinrichtung verbunden ist.

12. Funkkommunikationsendgerät nach Anspruch 11, **dadurch gekennzeichnet, dass** das erste Endgeräteteil eine zweite Klinke (21) trägt, die konstruiert ist, lösbar in Eingriff mit einem funktionsmäßig zusammenwirkenden Verriegelungsteil (22) zu sein, welches auf dem zweiten Endgeräteteil konstruiert ist.

13. Funkkommunikationsendgerät nach Anspruch 12, **dadurch gekennzeichnet, dass** die zweite Klinke auf dem zweiten Endgeräteteilbereich des ersten Endgeräteteils konstruiert ist.

14. Funkkommunikationsgerät nach einem der vorhergehenden Ansprüche, **dadurch gekennzeichnet, dass** der erste Benutzereingabe-Schnittstellenbereich (9) und der zweite Benutzereingabe-Schnittstellenbereich (10) zusammen eine alphanumerische Tastatur (9, 10) für den Computermodusbetrieb des Endgeräts aufweisen, die zur Verwendung bei einer Orientierung ausgebildet ist, wobei eine langgestreckte Erweiterung des Endgeräts horizontal angeordnet ist.

15. Funkkommunikationsgerät nach einem der vorhergehenden Ansprüche 1 bis 13, **dadurch gekennzeichnet, dass** der erste Benutzereingabe-Schnittstellenbereich (9) und der zweite Benutzereingangs-Schnittstellenbereich (10) berührungsempfindliche Anzeigen aufweisen, die konstruiert sind, zusammen eine funktionsmäßige alphanumerische Tastatur (9, 10) für den Computermodusbetrieb des Endgeräts zu zeigen, welche zur Verwendung bei einer Orientierung angepasst ist, wobei die langgestreckte Erweitenmg des Endgeräts horizontal angeordnet ist.

16. Funkkommunikationsendgerät nach Anspruch 14 oder 15, **dadurch gekennzeichnet, dass** die alphanumerische Tastatur (9, 10) für den Computermodusbetrieb die numerische Tastatur (9) für den Telefonmodusbetrieb aufweist.

17. Funkkommunikationsgerät nach einem der vorhergehenden Ansprüche, **dadurch gekennzeichnet, dass** der erste Endgeräteteilbereich (2, 82) und der zweite Endgeräteteilbereich (3, 83) im Wesentlichen gleich lang sind.

18. Funkkommunikationsgerät nach einem der vorhergehenden Ansprüche 1 bis 7, **dadurch gekennzeichnet, dass** der erste Endgeräteteilbereich (1102) länger ist als der zweite Endgeräteteilbereich (1103).

## Revendications

1. Terminal de communication radio (1) comprenant un premier élément de terminal (2, 3) portant une interface d'entrée utilisateur (9, 10), un second élément de terminal (4) portant une interface de sortie utilisateur (11), un premier dispositif charnière (8) reliant lesdits éléments de terminal et destiné à déployer le terminal autour d'un premier axe de rotation (7) entre une position de fermeture et une première position d'ouverture, un second dispositif charnière (5) destiné à déployer le terminal autour d'un second axe de rotation (6), perpendiculaire audit premier axe, vers une seconde position d'ouverture,
**caractérisé en ce que** le premier élément de terminal comprend une première partie d'élément de terminal (2) portant une première partie d'interface d'entrée utilisateur (9) et une seconde partie d'élément de terminal (3) portant une seconde partie d'interface d'entrée utilisateur (10), la première et la seconde partie d'élément de terminal étant connectées entre elles par ledit second dispositif charnière, si bien que la première partie d'élément de terminal (2) peut se déployer vers la seconde position d'ouverture en dégageant la première partie d'interface d'entrée utilisateur (9) et une partie de l'interface de sortie utilisateur (11), une partie complémentaire de l'interface de sortie utilisateur (11) étant disposée face à la seconde partie d'interface d'entrée utilisateur (10).

2. Terminal de communication radio selon la revendication 1, **caractérisé en ce que** lesdits éléments de terminal comprennent des corps allongés sensiblement plans, ledit premier axe s'étendant dans le plan respectif desdits corps, parallèlement à l'extension allongée desdits corps.

3. Terminal de communication radio selon l'une quelconque des revendications précédentes, **caractérisé en ce que** lesdits éléments de terminal sont disposés avec lesdites première et seconde interfaces se faisant face dans ladite position de fermeture.

4. Terminal de communication radio selon l'une quelconque des revendications précédentes, **caractérisé en ce que** ladite première partie d'élément de terminal est précontrainte pour venir adopter ladite seconde position d'ouverture et porte un premier verrou (70, 72) conçu pour verrouiller de manière amovible ladite première partie d'élément de terminal dans une position dans laquelle elle s'étend dans le même plan que ladite seconde partie d'élément de terminal.

5. Terminal de communication radio selon la revendication 4, **caractérisé en ce qu'**un premier élément de verrouillage (73) coopérant avec ledit premier verrou (72) est ménagé sur ladite seconde partie d'élément de terminal.

6. Terminal de communication radio selon la revendication 4, **caractérisé en ce qu'**un premier élément de verrouillage (71) coopérant avec ledit premier verrou (70) est implanté sur ledit second élément de terminal.

7. Terminal de communication radio selon l'une quelconque des revendications précédentes, **caractérisé en ce que** ladite première partie d'élément de terminal est précontrainte pour venir adopter une position dans laquelle les première et seconde parties d'élément de terminal sont disposées de manière juxtaposée dans le même plan et porte un premier verrou (91) conçu pour verrouiller de manière amovible ladite première partie d'élément de terminal dans ladite seconde position d'ouverture.

8. Terminal de communication radio selon la revendication 7, **caractérisé en ce qu'**un premier élément de verrouillage (92) coopérant avec ledit premier verrou est ménagé sur ladite seconde partie d'élément de terminal.

9. Terminal de communication radio selon l'une quelconque des revendications précédentes, **caractérisé en ce que** ladite première partie d'interface d'entrée utilisateur comprend un clavier numérique (9) pour le mode de fonctionnement téléphonique du terminal, conçu pour être utilisé dans une orientation où l'extension longitudinale du terminal est disposée verticalement.

10. Terminal de communication radio selon l'une quelconque des revendications précédentes 1 à 8, **caractérisé en ce que** ladite première partie d'interface d'entrée utilisateur comprend un écran d'affichage tactile conçu pour afficher un clavier numérique fonctionnel (9) pour le mode de fonctionnement téléphonique du terminal, conçu pour être utilisé dans une orientation où l'extension longitudinale du terminal est disposée verticalement.

11. Terminal de communication radio selon l'une quelconque des revendications précédentes, **caractérisé en ce que** ladite seconde partie d'élément de terminal (3) du premier élément de terminal est connectée audit second élément de terminal (4) à l'aide dudit premier dispositif charnière.

12. Terminal de communication radio selon la revendication 11, **caractérisé en ce que** ledit premier élément de terminal porte un second verrou (21) conçu pour s'engager de manière amovible avec un second élément de verrouillage coopérant (22) ménagé sur ledit second élément de terminal.

13. Terminal de communication radio selon la revendication 12, **caractérisé en ce que** ledit second verrou est ménagé sur ladite seconde partie d'élément de terminal dudit premier élément de terminal.

14. Terminal de communication radio selon l'une quelconque des revendications précédentes, **caractérisé en ce que** ladite première partie d'interface d'entrée utilisateur (9) et ladite seconde partie d'interface d'entrée utilisateur (10) forment ensemble un clavier alphanumérique (9, 10) destiné au mode de fonctionnement informatique du terminal, conçu pour être utilisé dans une orientation où l'extension longitudinale du terminal est disposée horizontalement.

15. Terminal de communication radio selon l'une quelconque des revendications précédentes 1 à 13, **caractérisé en ce que** ladite première partie d'interface d'entrée utilisateur (9) et ladite seconde partie d'interface d'entrée utilisateur (10) comprennent des écrans d'affichage tactiles conçus pour offrir ensemble un clavier alphanumérique fonctionnel (9, 10) destiné au mode de fonctionnement informatique du terminal, conçu pour être utilisé dans une orientation où l'extension longitudinale du terminal est disposée horizontalement.

16. Terminal de communication radio selon la revendication 14 ou 15, **caractérisé en ce que** ledit clavier alphanumérique (9, 10) destiné au mode de fonctionnement informatique du terminal comprend ledit clavier numérique (9) destiné au mode de fonctionnement téléphonique.

17. Terminal de communication radio selon l'une quelconque des revendications précédentes, **caractérisé en ce que** ladite première partie d'élément de terminal (2, 82) et ladite seconde partie d'élément de terminal (3, 83) sont sensiblement de même longueur.

18. Terminal de communication radio selon l'une quelconque des revendications précédentes 1 à 17, **caractérisé en ce que** ladite première partie d'élément de terminal (1102) est plus longue que ladite seconde partie d'élément de terminal (1103).
